# EUROPÄISCHE PATENTANMELDUNG

(11) **EP 2 045 157 A2**
(43) Veröffentlichungstag der Anmeldung: **08.04.2009**
(21) Anmeldenummer: 08017272.9
(22) Anmeldetag: 01.10.2008
(51) Int. Cl.: B60T 13/38, B60T 15/04

(54) **Handsteuereinheit für eine Feststellbremse**

(30) Priorität: 01.10.2007 DE 102007046946
(71) Anmelder: KNORR-BREMSE Systeme für Nutzfahrzeuge GmbH, 80809 München (DE)
(72) Erfinder: Hilberer, Eduard, 68766 Hockenheim (DE); Pellecuer, Francois, 80333 München (DE)
(74) Vertreter: Schönmann, Kurt

(57) **Zusammenfassung**

Die Erfindung betrifft eine Handsteuereinheit für eine Feststellbremse eines Fahrzeugs, wobei die Handsteuereinheit geeignet ist ein Lösen und ein Spannen der Feststellbremse zu veranlassen.

Die Erfindung betrifft weiterhin ein Verfahren zum Lösen einer Feststellbremse eines Fahrzeugs mit einer Handsteuereinheit, wobei die Handsteuereinheit ein Lösen oder Spannen der Feststellbremse veranlasst.

Erfindungsgemäß ist vorgesehen, dass die Handsteuereinheit eine elektromechanische Einrichtung aufweist, die geeignet ist, ein Betätigen der Handsteuereinheit zuzulassen oder zu unterbinden.

## Beschreibung

Die Erfindung betrifft eine Handsteuereinheit für eine Feststellbremse eines Fahrzeugs, wobei die Handsteuereinheit geeignet ist, ein Lösen und ein Spannen der Feststellbremse zu veranlassen.

Die Erfindung betrifft weiterhin ein Verfahren zum Lösen einer Feststellbremse eines Fahrzeugs mit einer Handsteuereinheit, wobei die Handsteuereinheit ein Lösen oder Spannen der Feststellbremse veranlasst.

Die Feststellbremse eines Fahrzeugs wird üblicherweise manuell durch eine Handsteuereinheit gelöst oder gespannt, wobei die Handsteuereinheit eine einfache mechanische Vorrichtung mit zumindest zwei Schaltpositionen zum Lösen und zum Öffnen der Feststellbremse sein kann. Es ist bekannt, eine derartige Handsteuereinheit mit einer zusätzlichen mechanischen Sicherung auszustatten, dass ein unbeabsichtigtes Lösen der Feststellbremse durch den Fahrer verhindert wird. Weiterhin ist bekannt, über die Handsteuereinheit eine Testfunktion zu initiieren, nämlich das Lösen der Feststellbremse eines Anhängers, um zu ermitteln, ob die Feststellbremse des Zugfahrzeugs alleine in der Lage ist, das gesamte Fahrzeug zu halten. Die Nutzung dieser Testfunktion ist dem Fahrzeugführer insbesondere dann angeraten, wenn der das Fahrzeug am Berg abstellt.

Im Hinblick auf das Lösen der Feststellbremse ist es wichtig, bestimmte Sicherheitskriterien einzuhalten. Insbesondere darf die Feststellbremse nicht geöffnet werden, wenn im Betriebsbremssystem noch kein ausreichender Druck für die Funktion der Betriebsbremse vorhanden ist. Zumindest muss der so genannte Hilfsbremsdruck vorhanden sein, bei dem es sich um einen Druck unterhalb des normalen Betriebsbremsdruckes handelt, der allerdings bereits ausreichend ist, um eine Bremsung des Fahrzeugs durchzuführen. Weitere Sicherheitsbestimmungen gelten insbesondere in einigen Ländern Nordeuropas. Diese fordern die so genannte "Northland park brake function". Sie stellt sicher, dass die Feststellbremse nur dann gelöst werden kann, wenn sich der Fahrer im Führerhaus befindet. Normalerweise, das heißt bei ausreichendem Druck in der Bremsanlage, ist dies selbstverständlich, denn die Handsteuereinheit zum Lösen der Feststellbremse befindet sich im Führerhaus, so dass der Fahrer gezwungenermaßen im Führerhaus anwesend sein muss, wodurch er auch in der Lage ist, das Fahrzeug bei gelöster Feststellbremse jederzeit durch Betätigen der Betriebsbremse zum Stehen zu bringen. Allerdings kann eine gefährliche Situation dann auftreten, wenn der Fahrer den Fahrzeugmotor bei druckloser Bremsanlage startet und damit den Druckaufbau durch den Betrieb des Kompressors erst in Gang setzt. Gibt der Fahrer zu diesem Zeitpunkt den Druckluftpfad zu den Federspeicherzylindern frei, so führt dies aufgrund eines nicht ausreichenden Druckes noch nicht zum Lösen der Feststellbremse. Das Fahrzeug steht also still, und der Fahrer könnte von der irrigen Annahme ausgehen, dass insgesamt eine sichere Situation vorliegt. Verlässt der Fahrer nun das Führerhaus, beispielsweise um eine vereiste Windschutzscheibe vom Eis zu befreien, so kann dies dazu führen, dass der Druck zum Lösen der Feststellbremse gerade dann ausreicht, wenn der Fahrer sich nicht im Führerhaus befindet. Dies hat zur Folge, dass das Fahrzeug wegrollt und eventuell sogar den mit dem Reinigen der Scheiben befassten Fahrer überrollt.

Zur Realisierung dieser Sicherheitsvorschrift ist es bekannt eine separate Ventileinrichtung in dem Druckluftpfad zu den Federspeicherzylindern vorzusehen, beziehungsweise derart auf eine in dem Druckluftpfad bereits vorhandene Ventileinrichtung einzuwirken, dass der Druckluftpfad nur freigegeben werden kann, wenn der Fahrer im Führerhaus anwesend ist und ein ausreichender Versorgungsdruck für die Hilfsbremswirkung zur Verfügung steht.

Nachteilig bei den bekannten Realisierungen der "Northland park brake function" ist, neben dem hohen baulichen Aufwand, insbesondere das Lösen der Feststellbremse eines eventuell vorhandenen Anhängers, die nicht durch die Ventileinrichtung im Druckluftpfad zu den Federspeicherzylindern des Zugfahrzeugs unterbunden werden kann. Es kann also vorkommen, dass der Fahrer das Fahrzeug in einen Zustand versetzt, bei dem die Feststellbremse des Zugfahrzeugs das gesamte Fahrzeug halten muss. Sollte das Zugfahrzeug dazu jedoch nicht in der Lage sein, so kann das Fahrzeug trotz der "Northland park brake function" unbeabsichtigt wegrollen, während der Fahrer sich nicht im Führerhaus befindet.

Der Erfindung liegt die Aufgabe zugrunde, die oben beschriebene "Northland park brake function" in vereinfachter Weise zu realisieren und gleichzeitig die Probleme im Zusammenhang mit der Feststellbremse eines Anhängers zu lösen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Handsteuereinheit dadurch auf, dass die Handsteuereinheit eine elektromechanische Einrichtung aufweist, die geeignet ist, ein Betätigen der Handsteuereinheit zuzulassen oder zu unterbinden. Durch das mechanische Blockieren der Handsteuereinheit ist es möglich, das Lösen der Feststellbremse des Fahrzeugs sicher zu verhindern, solange kein ausreichender Versorgungsdruck für eine Hilfsbremswirkung vorhanden ist. Da das Betätigen der Handsteuereinheit mechanisch unterbunden ist, wird auch die Feststellbremse eines Anhängers nicht gelöst, bis ein für eine Hilfsbremswirkung ausreichender Versorgungsdruck vorhanden ist.

Nützlicherweise kann vorgesehen sein, dass ein die elektromechanische Einrichtung schaltendes Steuergerät in einer Weise ausgebildet ist, dass die elektromechanische Einrichtung nur dann in einen das Betätigen der Handsteuereinheit zulassenden Zustand überführbar ist, wenn ein gemessener Betriebsbremsdruck für eine Hilfsbremswirkung ausreichend ist. Das die elektromechanische Einrichtung schaltende Steuergerät realisiert also die Steuerung der "Northland park brake function".

Vorteilhafterweise kann vorgesehen sein, dass die Handsteuereinheit einen um eine Achse verschwenkbaren Hebel aufweist, über den die Funktion der Feststellbremse steuerbar ist. Ein Hebel, der zum Lösen beziehungsweise Spannen der Feststellbremse in verschiedene Schaltpositionen gebracht werden kann, ist ein für den Fahrer des Fahrzeugs bekanntes Bedienelement.

Nützlicherweise kann vorgesehen sein, dass die elektromechanische Einrichtung eine Spule, eine Feder, einen Sperrstift und eine elektrischen Anschluss umfasst.

Vorteilhafterweise kann vorgesehen sein, dass der Sperrstift der elektromechanischen Einrichtung parallel zur Drehachse des Hebels angeordnet ist. Die Anordnung des Sperrstiftes parallel zur Drehachse des Hebels erlaubt eine einfache Ausführung der mechanischen Sperre, da der Sperrstift nur senkrecht zu seiner eigenen Bewegungsrichtung belastet wird.

Alternativ kann vorgesehen sein, dass der Sperrstift der elektromechanischen Einrichtung senkrecht zur Drehachse des Hebels angeordnet ist. Auch mit dieser Anordnung des Sperrstiftes ist ein sicheres Unterbinden der Betätigung der Handsteuereinheit möglich.

Vorteilhafterweise kann dabei vorgesehen sein, dass die Stellung des Hebels über einen Exzenter von dem Sperrstift der elektromechanischen Einrichtung erfassbar ist, wobei ein elektrisches Signal erzeugt wird.

Nützlicherweise kann weiterhin vorgesehen sein, dass das die elektromagnetische Einrichtung schaltende Steuergerät in einer Weise ausgebildet ist, dass das bei der Erfassung der Stellung des Hebels erzeugte elektrische Signal zur Bereitstellung einer stufbaren Feststellbremsfunktion verwendet wird. Die Detektion der genauen Stellung des Hebels zwischen den zwei einer vollständig gelösten und einer vollständig gespannten Feststellbremse zugehörigen Endposition erlaubt die Bereitstellung einer stufbaren Bremswirkung über die Feststellbremse.

Vorteilhafterweise kann vorgesehen sein, dass die elektromechanische Einrichtung am Sockel des Hebels der Handsteuereinheit angeordnet ist und im verriegelten Zustand ein Entriegeln einer vorhanden mechanischen Sicherung verhindert.

Alternativ kann vorgesehen sein, dass die elektromechanische Einrichtung am Hebel der Handsteuereinheit angeordnet ist und im verriegelten Zustand ein Entriegeln einer vorhandenen mechanischen Sicherung verhindert. Dadurch dass die elektromechanische Einrichtung nur das Entriegeln einer vorhandenen mechanischen Sicherung verhindert, kann die elektromechanische Einrichtung für geringere Kräfte ausgelegt sein, weshalb sich eine Material- beziehungsweise Platzersparnis ergibt.

Die Erfindung baut auf dem gattungsgemäßen Verfahren dadurch auf, dass eine in der Handsteuereinheit angeordnete elektromechanische Einrichtung die Handsteuereinheit blockiert, wenn kein ausreichender Druck für eine Hilfsbremswirkung gemessen wird. Auf diese Weise werden die Vorteile und Besonderheiten der Handsteuereinheit auch im Rahmen eines Verfahrens umgesetzt.

Dies kann dadurch weitergebildet werden, dass die in der Handsteuereinheit angeordnete elektromechanische Einrichtung in Abhängigkeit des Zustandes der Handsteuereinheit ein elektrisches Signal erzeugt und dass ein angeschlossenes Steuergerät das erzeugte elektrische Signal zur Bereitstellung einer stufbaren Feststellbremsfunktion verwendet.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung einer erfindungsgemäßen Handsteuereinheit mit angeschlossenem Steuergerät;
- Figur 2: ein Blockschaltbild einer Druckluftaufbereitungsanlage mit einer erfindungsgemäßen Handsteuereinheit;
- Figur 3: zwei vereinfachte Ausführungsformen einer elektromechanischen Einrichtung;
- Figur 4: eine Ausführungsform einer erfindungsgemäßen Handsteuereinheit;
- Figur 5: eine weitere Ausführungsform einer erfindungsgemäßen Handsteuereinheit;
- Figur 6: eine weitere Ausführungsform einer erfindungsgemäßen Handsteuereinheit;
- Figur 7: eine weitere Ausführungsform einer erfindungsgemäßen Handsteuereinheit;
- Figur 8: eine weitere Ausführungsform einer erfindungsgemäßen Handsteuereinheit;
- Figur 9: eine weitere Ausführungsform einer Handsteuereinheit;
- Figur 10: ein einfaches Verfahrensmodell und
- Figur 11: eine zeitliche Übersicht wichtiger Kenngrößen.

In den nachfolgenden Zeichnungen bezeichnen gleiche Bezugszeichen gleiche oder gleichartige Teile.

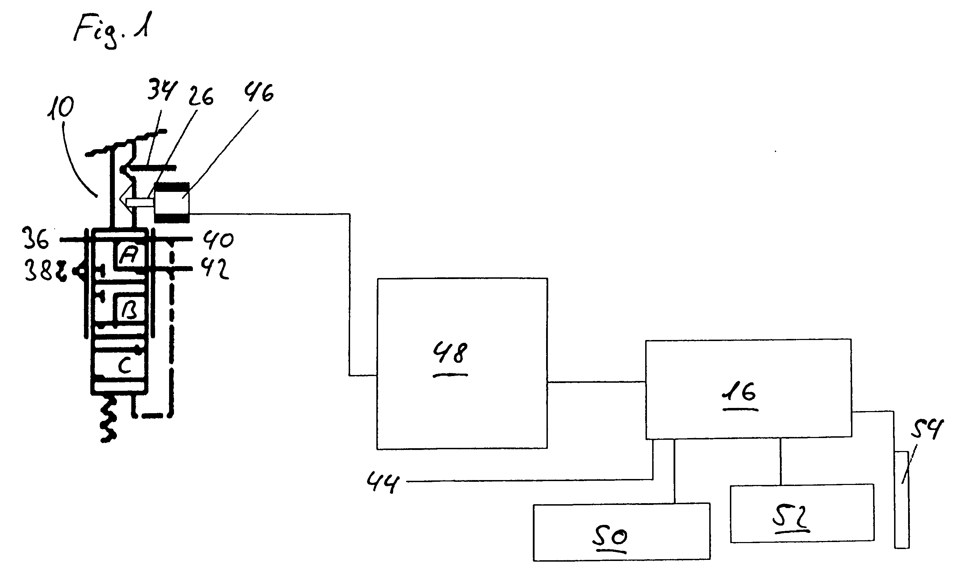

Figur 1 zeigt eine schematische Darstellung einer erfindungsgemäßen Handsteuereinheit mit angeschlossenem Steuergerät. Die dargestellte Handsteuereinheit 10 weist drei Schaltpositionen A, B und C auf, die folgenden Zuständen entsprechen:
A Feststellbremse gelöst
B Feststellbremse gespannt
C Testfunktion

Die Handsteuereinheit 10 weist weiterhin einen Anschluss 36 an einen Druckluftvorrat, einen Anschluss 38 an eine Entlüftung, einen Anschluss 40 an eine Feststellbremse und einen Anschluss 42 an ein Anhängersteuerventil auf. Im Bereich eines dargestellten Bedienelementes der Handsteuereinheit 10 ist weiterhin eine mechanisch ausgeführte Sicherung 34 dargestellt, die ein unbeabsichtigtes Betätigen der Handsteuereinheit verhindert. Weiterhin ist eine elektromechanische Einrichtung in Form eines Sperrstiftes 26 und eines Hubmagneten 46 dargestellt, die ebenfalls geeignet ist, ein Betätigen der Handsteuereinheit 10 zu unterbinden. Der Hubmagnet 46 ist elektrisch mit einem Steuergerät 16 gekoppelt, wobei optional Ausgabemittel 48 vorgesehen sein können, die dem Fahrer beispielsweise den Status der Feststellbremse oder einen Grund für eine eventuelle Blockierung der Handsteuereinheit 10 signalisieren können. Das Steuergerät 16 ist weiterhin mit einem die Fahrzeuggeschwindigkeit detektierenden Drehzahlsensor 54, einem den Betriebsbremsdruck beziehungsweise den Druck der Feststellbremse messenden Drucksensor 50 und einem weiteren Sensor 52 zur Detektion der Fahreranwesenheit gekoppelt. Der Drehzahlsensor 54 kann entweder als einfacher Raddrehzahlsensor ausgebildet sein oder alternativ die Drehzahl am Getriebeausgang messen. Der Sensor 52 kann die Fahreranwesenheit beispielsweise über das Betätigen eines Gas- oder Bremspedals, einen geschlossenen Gurt des Fahrers oder die Detektion des Gewichts des Fahrers auf dem Fahrersitz realisieren. Die Kopplung des Steuergerätes 16 mit den weiteren dargestellten Bestandteilen kann über einfache elektrische Leitungen oder den CAN-Bus erfolgen.

Über die Fahreranwesenheitsdetektion ist in einfacher Weise eine Wegrollsperrfunktion realisierbar. Bewegt sich das Fahrzeug nachdem die Zündung ausgeschaltet und die Feststellbremse geschlossen wurde und ist gleichzeitig der Fahrer nicht anwesend, so kann die Betriebsbremse über den Steueranschluss 44 von dem Steuergerät 16 geschlossen werden, um ein unbeabsichtigtes Wegrollen des Fahrzeugs zu verhindern. Der Hubmagnet 46 verhindert in bestromten Zustand ein Lösen der Feststellbremse des Anhängers und des Zugfahrzeugs, indem das Betätigen der Handsteuereinheit 10 unterbunden wird. Ist der Hubmagnet 46 nicht dauerhaft bestromt, so kann mittels pulsweitenmodulierter Ansteuerung und Spulenauswertung des Quotienten R/L der aktuelle Hubzustand des Hubmagneten 46 bestimmt werden.

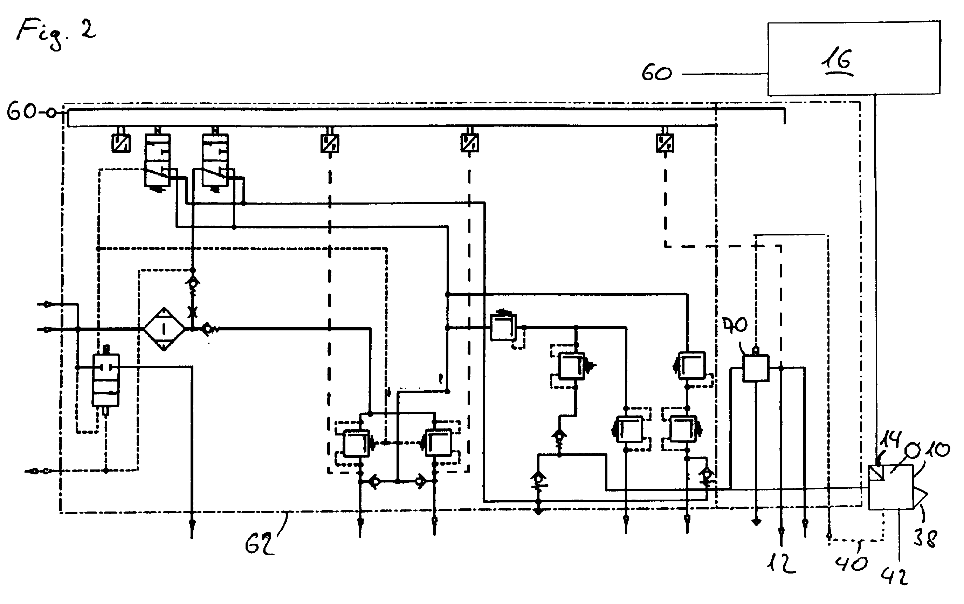

Figur 2 zeigt ein Blockschaltbild einer Druckluftaufbereitungsanlage mit einer erfindungsgemäßen Handsteuereinheit. Die dargestellte Druckluftaufbereitungsanlage 62 verfügt über einen Anschluss 60 an den CAN-Bus und ein Relaisventil 70, über welches das Druckniveau am Anschluss 12 der Feststellbremse gesteuert wird. Das Relaisventil 70 wird von der Handsteuereinheit 10 über den Steueranschluss 40 angesteuert. Die Handsteuereinheit 10 umfasst weiterhin eine Entlüftungseinrichtung 38, einen Anschluss 42 für ein Anhängersteuerventil und eine elektromechanische Einrichtung 14 zum Unterbinden des Betätigens der Handsteuereinheit 10, wobei die elektromechanische Einrichtung 14 von einem Steuergerät 16 gesteuert wird, welches einen Anschluss 60 an den CAN-Bus aufweist. Die dargestellte Druckluftaufbereitungsanlage 62 ist hierbei nur als exemplarisches Beispiel zu verstehen. Die Verwendung einer anders aufgebauten Druckluftaufbereitungsanlage mit der erfindungsgemäßen Handsteuereinheit 10 ist problemlos möglich.

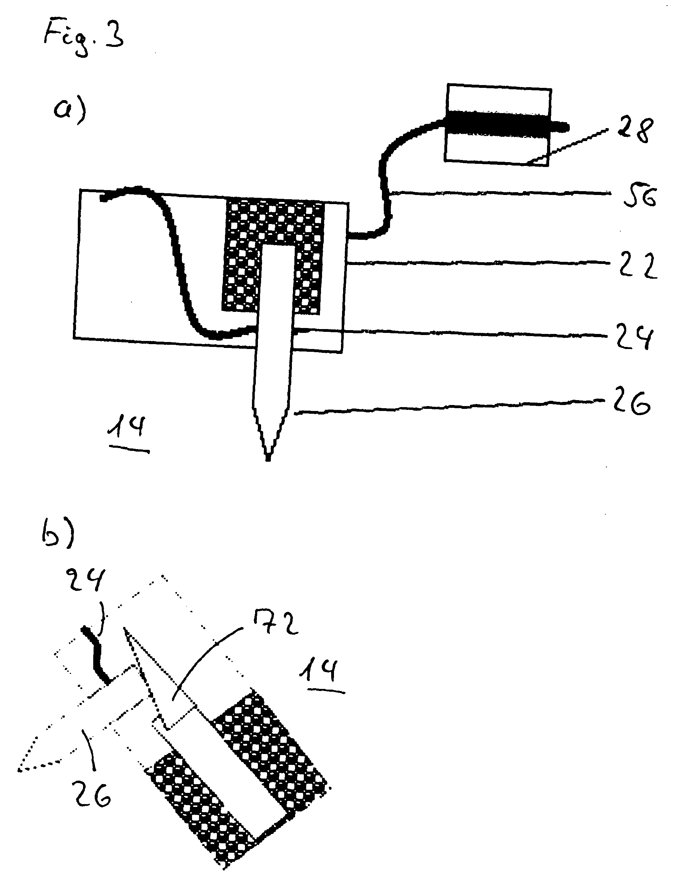

Figur 3 zeigt zwei vereinfachte Ausführungsformen einer elektromechanischen Einrichtung. Die in Figur 3a dargestellte elektromechanische Einrichtung 14 umfasst eine Spule 22, eine Feder 24, einen Sperrstift 26 und einen elektrischen Anschluss 28, der über ein Kabel 56 mit der Spule 22 gekoppelt ist. Wird die Spule 22 bestromt, so wird der Sperrstift 26 entgegen der Kraft der Feder 24 ausgelenkt. Die in Figur 3b dargestellte zweite Ausführungsform einer elektromechanischen Einrichtung 14 arbeitet prinzipiell nach dem selben Prinzip. Der Sperrstift 26 wird nun jedoch senkrecht zu der durch eine Spule verursachte Auslenkung eines Hebelarms 72 bewegt. Andere Ausführungsformen elektromechanischer Einrichtungen sind ebenso denkbar.

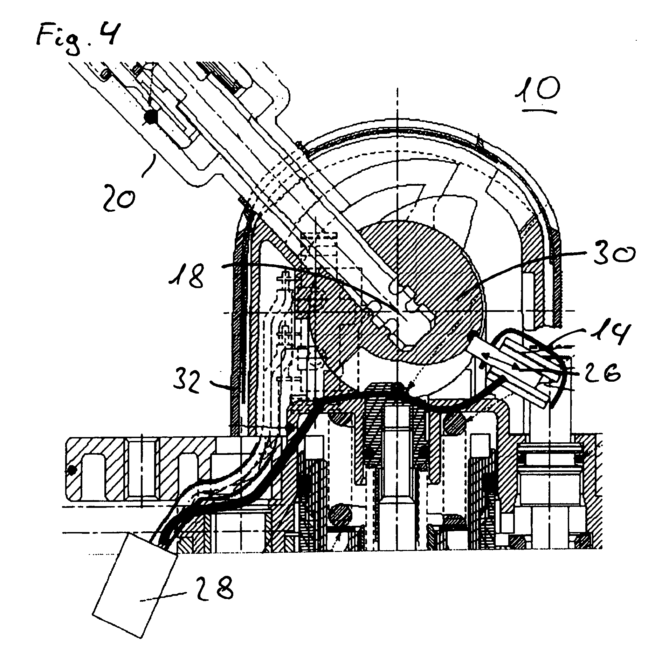

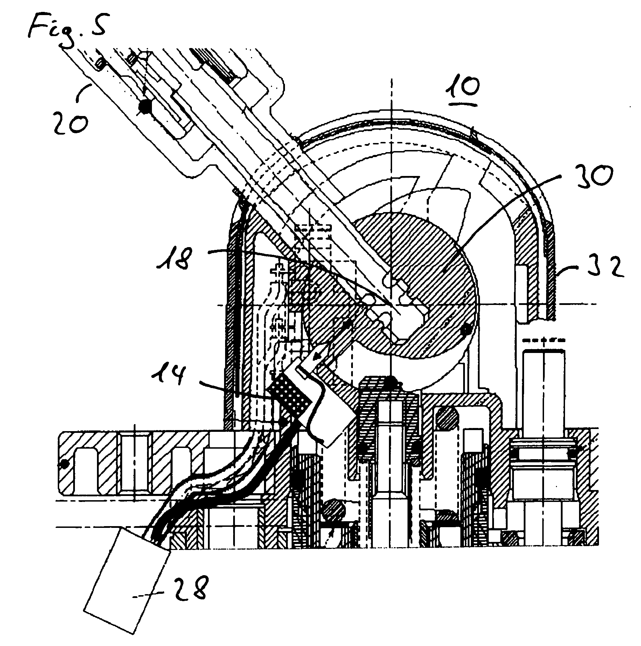

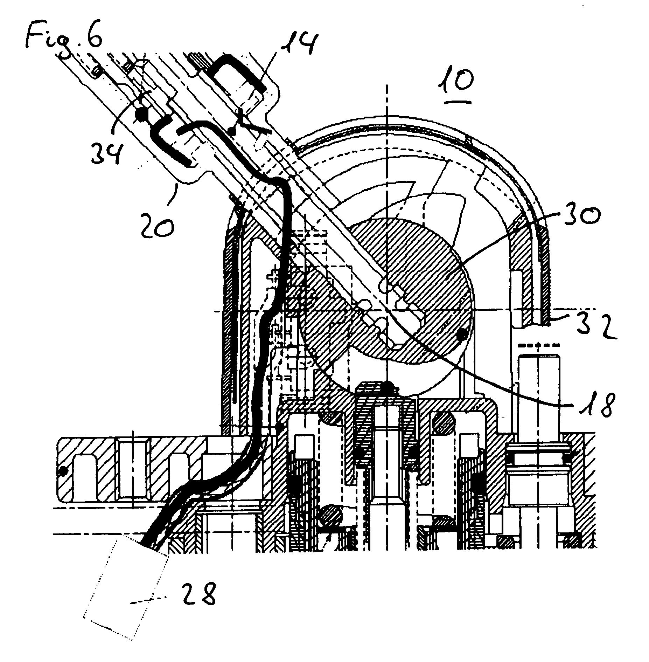

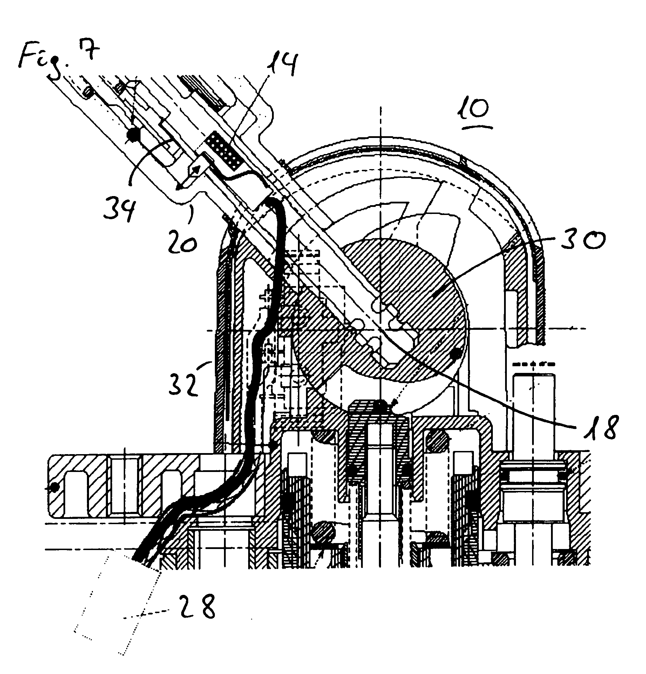

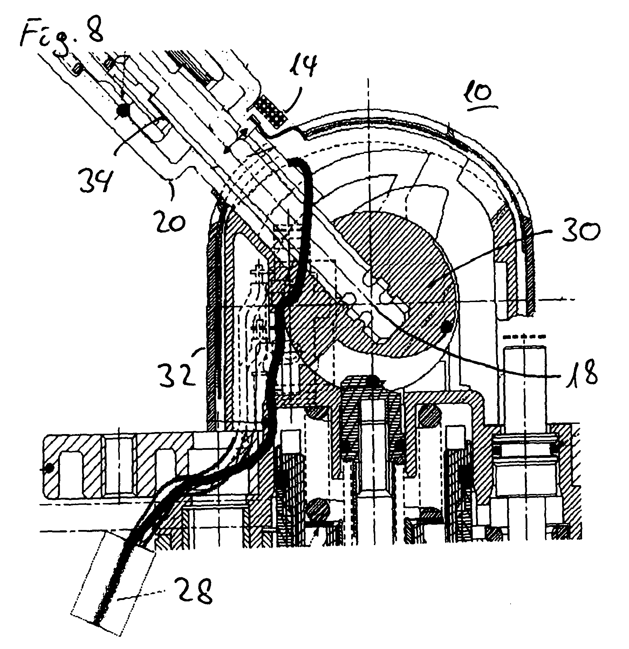

Figuren 4 bis 8 zeigen Ausführungsformen einer erfindungsgemäßen Handsteuereinheit. Die dargestellte Handsteuereinheit 10 ist jeweils aus einem Hebel 20, der um eine zentrale Achse 18 in einem Sockel 32 drehbar gelagert ist, aufgebaut. Weiterhin ist im Sockel 32 noch ein Exzenter 30 angeordnet, der über den Hebel 20 bewegt werden kann, wobei die verschiedenen Druckluftpfade zum Lösen und Spannen der Feststellbremse freigegeben werden. Weiterhin ist an verschiedenen Positionen jeweils eine elektromechanische Einrichtung 14 mit einem elektrischen Anschluss 28 angeordnet, über die ein Betätigen der Handsteuereinheit 10 unterbunden werden kann. Figuren 4 und 5 zeigen Ausführungsformen, mit im Sockel 32 der Handsteuereinheit angeordneter elektromechanischer Einrichtung 14, wobei insbesondere die in Figur 4 dargestellte Ausführungsform geeignet ist, die genaue Position des Hebels 20 über den Exzenter 30 durch die elektromechanische Einrichtung 14 zu erfassen, indem pulsweitenmoduliert der Hubzustand des Sperrstiftes 26 gemessen wird. Figuren 6 bis 8 zeigen Ausführungsformen, bei denen die elektromechanische Einrichtung 14 in dem Hebel 20 angeordnet ist und eine dort vorhandene mechanische Sicherung 34 blockiert. Auf diese Weise wird ebenfalls ein Betätigen der Handsteuereinheit unterbunden. Es ist ebenfalls denkbar eine elektromechanische Einrichtung im Sockel der Handsteuereinheit anzuordnen, die eine im Hebel angeordnete mechanische Sicherung blockiert.

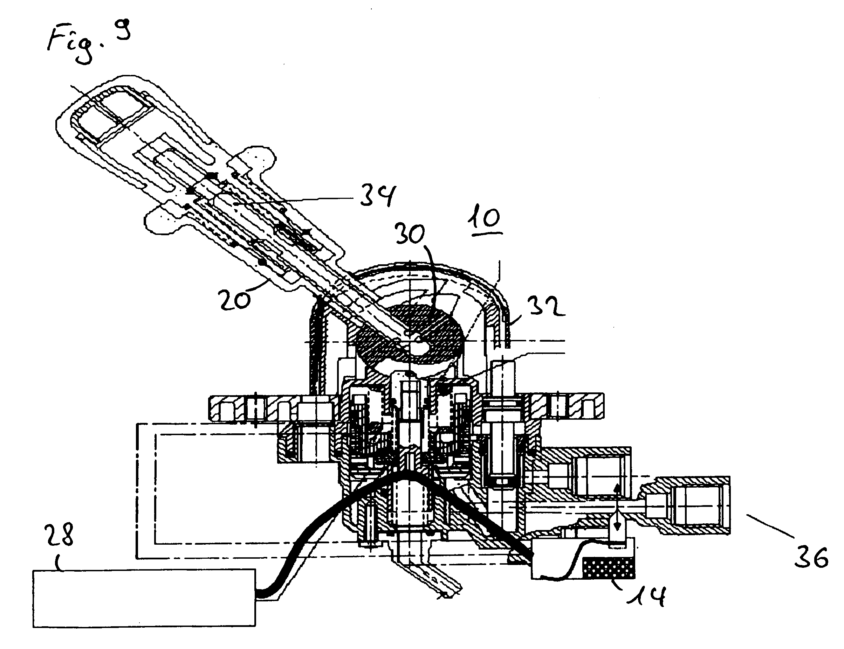

Figur 9 zeigt eine weitere Ausführungsform einer Handsteuereinheit. Bei dieser Ausführungsform ist die elektromechanische Einrichtung 14 derart angeordnet, dass ein Anschluss 36 an einen Druckluftvorrat vollständig gesperrt werden kann. Das Betätigen der Handsteuereinheit führt auch bei dieser Ausführungsform nicht zum Lösen der Feststellbremse des Fahrzeugs und zusammen mit der in Figur 1 dargestellten Sensorik zur Fahreranwesenheitsdetektion ist die "Northland park brake function" ebenfalls realisierbar.

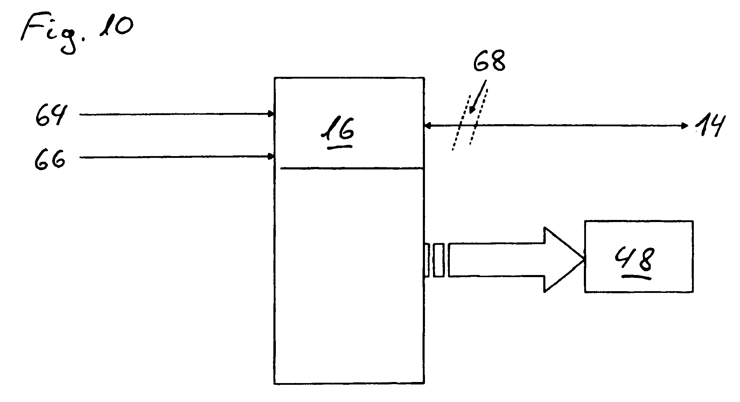

Figur 10 zeigt ein einfaches Verfahrensmodell. Das dargestellte zentrale Steuergerät 16 erhält Informationen über den Druck 64 und die Zündung 66 und entscheidet dementsprechend ob die elektromechanische Einrichtung ein Betätigen der Handsteuereinheit zulässt oder unterbindet. Die Verbindung zwischen dem Steuergerät 16 und der elektromechanischen Einrichtung 14 kann dabei direkt oder über einen Bus 68 erfolgen. Weiterhin kann über Ausgabemittel 48 Information bezüglich der Feststellbremse an den Fahrer ausgegeben werden. Die Ausgabemittel 48 können beispielsweise einfache Signallampen oder ein Display sein.

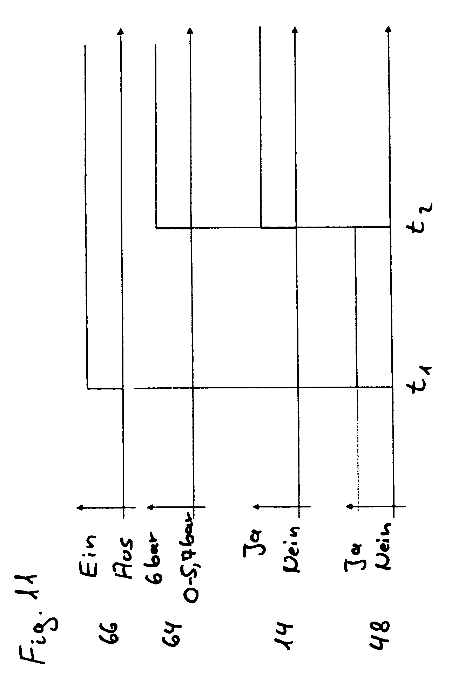

Figur 11 zeigt eine zeitliche Übersicht wichtiger Kenngrößen. Dargestellt ist die zeitliche Änderung der Zustände der Zündung 66, des Drucks 64, der Verriegelungszustand der elektromechanischen Einrichtung 14 und der Zustand der Ausgabemittel 48. Vor einem Zeitpunkt t₁ ist die Zündung 66 ausgeschaltet, der Druck unterhalb von den für eine Hilfsbremswirkung notwendigen Druck von 6 bar, die elektromechanische Einrichtung gibt die Verriegelung nicht frei und die Ausgabemittel 48 sind noch nicht aktiviert. Mit Einschalten der Zündung zum Zeitpunkt t₁ ändert sich gleichzeitig der Zustand der Ausgabemittel 48, die nun anzeigen können, dass nicht ausreichend Druck für eine Hilfsbremswirkung verfügbar ist, weshalb die Handsteuereinheit nicht freigegeben ist. Zu einem Zeitpunkt t₂ erreicht der Druck 64 die für eine Hilfsbremswirkung notwendigen 6 bar, weshalb ab diesem Zeitpunkt die elektromechanische Einrichtung 14 die Handsteuereinheit freigibt und gleichzeitig die Warnausgabe der Anzeigemittel 48 erlischt. Ab dem Zeitpunkt t₂ kann der Fahrer also die Feststellbremse lösen und losfahren.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Handsteuereinheit
- 12: Feststellbremse
- 14: elektromechanische Einrichtung
- 16: Steuergerät
- 18: Achse
- 20: Hebel
- 22: Spule
- 24: Feder
- 26: Sperrstift
- 28: elektrischer Anschluss
- 30: Exzenter
- 32: Sockel
- 34: Sicherung
- 36: Anschluss Vorrat
- 38: Entlüftung
- 40: Anschluss Feststellbremsrelais
- 44: Steueranschluss
- 42: Anschluss Anhängersteuerventil
- 46: Hubmagnet
- 48: Ausgabemittel
- 50: Drucksensor
- 52: Sensor
- 54: Sensor
- 56: Kabel
- 60: Anschluss CAN
- 62: Druckluftaufbereitungsanlage
- 64: Status Druck
- 66: Status Zündung
- 68: Bus
- 70: Relaisventil
- 72: Hebelarm
- A: Geöffnet
- B: Geschlossen
- C: Test

## Patentansprüche

1. Handsteuereinheit (10) für eine Feststellbremse (12) eines Fahrzeugs, wobei die Handsteuereinheit (10) geeignet ist, ein Lösen und ein Spannen der Feststellbremse (12) zu veranlassen, **dadurch gekennzeichnet, dass** die Handsteuereinheit (10) eine elektromechanische Einrichtung (14) aufweist, die geeignet ist, ein Betätigen der Handsteuereinheit (10) zuzulassen oder zu unterbinden.

2. Handsteuereinheit (10) nach Anspruch 1, **dadurch gekennzeichnet, dass** ein die elektromechanische Einrichtung (14) schaltendes Steuergerät (16) in einer Weise ausgebildet ist, dass die elektromechanische Einrichtung (14) nur dann in einen das Betätigen der Handsteuereinheit (10) zulassenden Zustand überführbar ist, wenn ein gemessener Betriebsbremsdruck für eine Hilfsbremswirkung ausreichend ist.

3. Handsteuereinheit (10) nach Anspruch 1 oder 2, **dadurch gekennzeichnet, dass** die Handsteuereinheit (10) einen um eine Achse (18) verschwenkbaren Hebel (20) aufweist, über den die Funktion der Feststellbremse (12) steuerbar ist.

4. Handsteuereinheit (10) nach einem der vorhergehenden Ansprüche, **dadurch gekennzeichnet, dass** die elektromechanische Einrichtung (14) eine Spule (22), eine Feder (24), einen Sperrstift (26) und einen elektrischen Anschluss (28) umfasst.

5. Handsteuereinheit (10) nach Anspruch 4, **dadurch gekennzeichnet, dass** der Sperrstift (26) der elektromechanischen Einrichtung (14) parallel zur Drehachse (18) des Hebels (20) angeordnet ist.

6. Handsteuereinheit (10) nach Anspruch 4, **dadurch gekennzeichnet, dass** der Sperrstift (26) der elektromechanischen Einrichtung (14) senkrecht zur Drehachse (18) des Hebels (20) angeordnet ist.

7. Handsteuereinheit (10) nach Anspruch 6, **dadurch gekennzeichnet, dass** die Stellung des Hebels (20) über einen Exzenter (30) von dem Sperrstift (26) der elektromechanischen Einrichtung (14) erfassbar ist, wobei ein elektrisches Signal erzeugt wird.

8. Handsteuereinheit (10) nach Anspruch 7, **dadurch gekennzeichnet, dass** das die elektromechanische Einrichtung (14) schaltende Steuergerät (16) in einer Weise ausgebildet ist, dass das bei der Erfassung der Stellung des Hebels (20) erzeugte elektrische Signal zur Bereitstellung einer stufbaren Feststellbremsfunktion verwendet wird.

9. Handsteuereinheit (10) nach Anspruch 3 oder 4, **dadurch gekennzeichnet, dass** die elektromechanische Einrichtung (14) am Sockel (32) des Hebels (20) der Handsteuereinheit (10) angeordnet ist und im verriegelten Zustand ein Entriegeln einer vorhandenen mechanischen Sicherung (34) verhindert.

10. Handsteuereinheit (10) nach Anspruch 3 oder 4, **dadurch gekennzeichnet, dass** die elektromechanische Einrichtung (14) am Hebel (20) der Handsteuereinheit (10) angeordnet ist und im verriegelten Zustand ein Entriegeln einer vorhandenen mechanischen Sicherung (34) verhindert.

11. Fahrzeug mit einer Handsteuereinheit (10) für eine Feststellbremse (12) nach einem der vorhergehenden Ansprüche.

12. Verfahren zum Lösen einer Feststellbremse (12) eines Fahrzeugs mit einer Handsteuereinheit (10), wobei die Handsteuereinheit (10) ein Lösen oder Spannen der Feststellbremse (12) veranlasst, **dadurch gekennzeichnet, dass** eine in der Handsteuereinheit (10) angeordnete elektromechanische Einrichtung (14) die Handsteuereinheit (10) blockiert, wenn kein ausreichender Druck für eine Hilfsbremswirkung gemessen wird.

13. Verfahren nach Anspruch 12, **dadurch gekennzeichnet,**
- **dass** die in der Handsteuereinheit (10) angeordnete elektromechanische Einrichtung (14) in Abhängigkeit des Zustandes der Handsteuereinheit (10) ein elektrisches Signal erzeugt und
- **dass** ein angeschlossenes Steuergerät (16) das erzeugte elektrische Signal zur Bereitstellung einer stufbaren Feststellbremsfunktion verwendet.
